(19) Europäisches Patentamt
European Patent Office
Office européen des brevets

(11) Veröffentlichungsnummer: **0 038 028**
**A1**

(12) # EUROPÄISCHE PATENTANMELDUNG

(21) Anmeldenummer: **81102693.9**

(22) Anmeldetag: **09.04.81**

(51) Int. Cl.³: **C 08 G 65/40**

(30) Priorität: **14.04.80 DE 3014230**

(43) Veröffentlichungstag der Anmeldung: **21.10.81**
**Patentblatt 81/42**

(84) Benannte Vertragsstaaten: **BE DE FR GB**

(71) Anmelder: **BASF Aktiengesellschaft,**
**Carl-Bosch-Strasse 38, D-6700 Ludwigshafen (DE)**

(72) Erfinder: **Blinne, Gerd, Dr., Im Woogtal 7,**
**D-6719 Bobenheim (DE)**
Erfinder: **Wurmb, Rolf, Dr., Kastellweg 10,**
**D-6900 Heidelberg (DE)**
Erfinder: **Schmidt, Franz, Dr., Trommstrasse 3,**
**D-6800 Mannheim (DE)**

(54) **Verfahren zur Herstellung von ketogruppenhaltigen Polyäthern.**

(57) Die Erfindung betrifft ein Verfahren zur Herstellung von ketogruppenhaltigen Polyethern. Ein ketogruppenhaltiges aromatisches Bisphenol wird mit einer Dihalogenbenzolverbindung in Gegenwart von wasserfreiem Alkalicarbonat polykondensiert. Die Polyether können zur Herstellung von Formkörpern verwendet werden.

EP 0 038 028 A1

ACTORUM AG

COMPLETE DOCUMENT

Verfahren zur Herstellung von ketogruppenhaltigen Polyäthern

Die Erfindung betrifft ein Verfahren zur Herstellung von ketogruppenhaltigen Polyäthern, insbesondere ketogruppenhaltigen Polyäthersulfonen.

Polymere mit Sulfon- und Äthergruppen sind bereits bekannt. Nach Angaben der DT-AS 15 45 106 werden lineare Polyarylenpolyäther durch Umsetzung von Alkalimetalldoppelsalzen von zweiwertigen mono- oder dinuklearen Phenolen mit einer äquimolaren Menge einer einkernigen Benzolverbindung mit zwei Halogenatomen und mindestens einer Elektronen anziehenden Gruppe in o- oder p-Stellung unter wasserfreien Bedingungen und in flüssiger Phase in Gegenwart von Sulfoxiden oder Sulfonen als Lösungsmittel hergestellt.

Polysulfonäther aus Phenolaten und aromatischen Dihalogenverbindungen werden gemäß DT-OS 19 57 091, DT-OS 27 31 816 und CA-PS 847 963 in Gegenwart von polaren hochsiedenden Lösungsmitteln und wasserfreiem Alkalicarbonat, vorzugsweise Kaliumcarbonat hergestellt.

Diese Polymere besitzen den Nachteil, daß sie bestimmte funktionelle Gruppen oder Bindungen aufweisen, die sie gegenüber der Einwirkung von Säuren oder Alkalien sowie vielen organischen Chemikalien und Lösungsmitteln bei hohen Temperaturen empfindlich machen.

Nach der DE-AS 15 45 106 können auch ketogruppenhaltige Polyäther hergestellt werden, z.B. durch Polykondensation von 4.4'-Dichlordiphenylsulfon. Derartige Polyäther zeigen jedoch immer noch eine verhältnismäßig hohe Lösungsmittelunempfindlichkeit bei relativ niedrigen Molekulargewichten.

Dd/BL

In der DE-OS 28 03 873 ist ein Verfahren zur Herstellung eines aromatischen Polyäthers, der die Gruppen $-SO_2-$ und/oder -CO- enthält, beschrieben, bei dem eine Mischung aus einem Bisphenol und einer Dihalogenverbindung mit benzoider Struktur in Gegenwart von Alkalimetallcarbonaten erhitzt wird. Als Bisphenol können u.a. 4.4'-Dihydroxydiphenylsulfon oder 4.4'-Dihydroxybenzophenon eingesetzt werden; als Dihalogenverbindung kommt neben vielen andern auch eine Verbindung

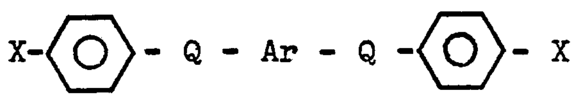

in Frage, wobei X = Halogen und Ar ein zweiwertiger aromatischer Rest ist, und Q eine Carbonylgruppe sein kann. Dabei hat sich nun gezeigt, daß zur Erzielung ausreichend hoher Molekulargewichte entweder die teuren Fluorderivate, z.B. 1.4-Bis-(4-fluorbenzoyl)-benzol eingesetzt werden müssen, oder daß bei Anwendung von Chlorderivaten die Reaktionstemperaturen so hoch gewählt werden müssen, daß verfärbte Endprodukte entstehen.

Der Erfindung lag nun die Aufgabe zugrunde, ketogruppenhaltige Polyäther mit verbesserter Lösungsmittelbeständigkeit unter Verwendung leicht zugänglicher Monomerer herzustellen, ohne dabei die bewährten Verfahren zur Herstellung von Polyäther verändern zu müssen mit dem Ziel, derartige Monomere auch zur Synthese verschiedener Co- bzw. Blockcopolymerer in den bereits bekannten Verfahren zur Herstellung von Polyäther einsetzen zu können.

Es wurde nun gefunden, daß dieses Ziel erreicht wird durch Polykondensation von im wesentlichen äquivalenten Mengen eines Bisphenols oder einer Mischung mehrerer Bisphenole mit einer Dihalogenbenzolverbindung oder einer Mischung mehrerer Dihalogenbenzolverbindungen in

Gegenwart von wasserfreiem Alkalicarbonat, wenn man mindestens ein ketogruppenhaltiges Bisphenol der Formel

$$HO-Ar^1-CO-Ar^2-CO-Ar^1-OH$$

verwendet, in der $Ar^1$ einen aromatischen Rest mit 6 bis 12 C-Atomen bedeutet und $Ar^2$ die Bedeutung von $Ar^1$ oder der Formel

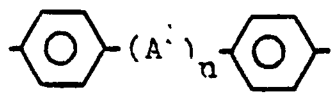

annehmen kann, in der A für die Gruppe $-SO_2-$, $-CO-$, $-C(CH_3)_2-$ oder $-O-$ steht und n 0 oder 1 bedeutet.

Beispiele geeigneter Bisphenole I sind Verbindungen der Formeln VII bis XIII,

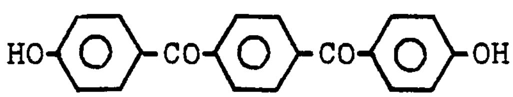

VII

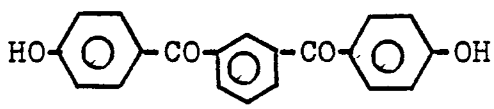

VIII

Sie können nach bekannten Methoden z.B. durch Fries'sche Umlagerung aus Tere- bzw. Isophthalsäurediphenylester hergestellt werden.

Zur Herstellung von hochmolekularen ketogruppenhaltigen Copolyäthern eignen sich als zusätzliche Bisphenole solche, die sich von der Formel

$$HO - Ar^1 \left[ (A^1)_n - Ar^1 \right]_m OH \qquad (III)$$

ableiten lassen, in der $Ar^1$ einen aromatischen Rest mit 6 bis 12 C-Atomen, $A^1$ einen zweiwertigen Rest aus der Gruppe $-C(CH_3)_2-$, $-O-$, $-CO-$ und vorzugsweise $-SO_2-$ und n und m 0 oder 1 bedeuten.

BAD ORIGINAL

Derartige Bisphenole sind beispielsweise Hydrochinon, Resorcin, 4,4'-Bisphenol, 2,2-Bis-(4-oxyphenyl-)propan, Bis-(4-oxyphenyl)-keton, und vorzugsweise Bis-(4-oxyphenyl)-sulfon.

Die genannten Bisphenole können einzeln oder in Form von Mischungen zur Anwendung kommen. Vorzugsweise verwendet wird Bis-(4-oxyphenyl-)sulfon.

Zur Herstellung von Blockcopolymeren kann es von Vorteil sein, zuerst das ketogruppenhaltige Bisphenol mit der Dihalogenbenzolverbindung vollständig abreagieren zu lassen und dann erst ein oder mehrere andere Bisphenole zuzugeben. Natürlich kann die Zugabe der Bisphenole auch in umgekehrter Reihenfolge durchgeführt werden.

Als Dihalogenbenzolverbindungen eignen sich Derivate der Formeln

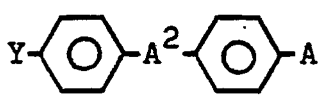 IV

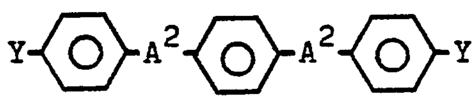 V

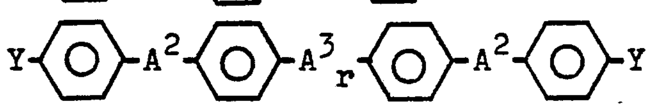 VI

in denen Y den Rest -F oder vorzugsweise Cl, $A^2$ den Rest -CO- oder vorzugsweise $-SO_2-$ bedeuten, $A^3$ für -O- oder -S- steht und r 0 oder 1 ist.

Als derartige Dihalogenbenzolverbindungen seien beispielsweise genannt Bis-(4-chlorphenyl-)sulfon, Bis-(4-fluorphenyl-)sulfon, Bis-(4-chlorphenyl-)keton, 1,4-Bis-(4-chlorbenzoyl-)benzol, 1,4-Bis-(4-chlorbenzolsulfonyl-)benzol, 4,4'-Bis-(4-chlorbenzoyl-)diphenyläther, 4,4'-Bis-(4-chlorbenzoyl-)diphenylsulfid, 4,4'-Bis-(4-chlorbenzoyl-)diphenyl,

4,4'-Bis-(4-chlorbenzolsulfonyl-)diphenyläther, 4,4'-Bis-(4-chlorbenzolsulfonyl-)diphenylsulfid oder 4,4'-Bis-(4-chlorbenzolsulfonyl-)diphenyl. Die Dihalogenbenzolverbindungen können ebenfalls einzeln oder als Gemische verwendet werden. Vorzugsweise verwendet werden Bis-(4-chlorphenyl-)sulfon und 4,4'-Bis-(4-chlorbenzoyl-)diphenyläther oder deren Gemische.

Als wasserfreie Alkalicarbonate kommen beispielsweise Natrium- und vorzugsweise Kaliumcarbonate oder deren Mischungen in Betracht.

Zur Durchführung des erfindungsgemäßen Verfahrens kann 1 Mol Bisphenol oder Bisphenol-Gemisch mit 0,9 bis 1,1 Molen, vorzugsweise ungefähr einem Mol Dihalogenbenzolverbindung und 1,0 bis 2,2 Molen, vorzugsweise 1,1 bis 2,0 Molen wasserfreiem Kaliumcarbonat nach einer bevorzugten Methode in Abwesenheit von Lösungsmitteln, vorzugsweise in der Schmelze, bei Temperaturen von 200°C bis 400°C oder bis zur beginnenden Zersetzung der Komponenten, vorzugsweise von 250°C bis 350°C, oder bis zur beginnenden Zersetzung der Komponenten zu Polyäthern umgesetzt werden.

Gegebenenfalls kann es von Vorteil sein, die Reaktionstemperatur mit fortschreitender Kondensation innerhalb der angegebenen Grenzen zu erhöhen. Zur Durchführung dieses Verfahrens eignen sich Vorrichtungen aus gegenüber den Reaktanden inerten Materialien, in denen bei den erforderlichen hohen Reaktionstemperaturen ein befriedigender Kontakt der Reaktionspartner gewährleistet wird und die Abtrennung flüchtiger Reaktionsprodukte möglich ist. Geeignet sind beispielsweise die für Polymere üblichen Kneter oder Extruder, die eine Vorrichtung zur Entfernung flüchtiger Bestandteile aufweisen.

Das Reaktionsgemisch wird solange im genannten Temperaturbereich polykondensiert, bis der erforderliche Kondensationsgrad erreicht ist. Die Polykondensationszeit kann je nach Art der Ausgangskomponenten und gewählten Reaktionsbedingungen 0,1 bis 10 Stunden, vorzugsweise 0,2 bis 2 Stunden, betragen. Als Endgruppen für die Polykondensate eignen sich alle chemisch inerten Gruppen. Zum Einbau der Endgruppen wird dem Polykondensationsgemisch zweckmäßigerweise nach Erreichen des gewünschten Polykondensationsgrades eine entsprechende Verbindung in einer geringen Menge zugesetzt. Vorzugsweise verwendet werden aliphatische und aromatische Halogenverbindungen, insbesondere Methylchlorid oder die oben genannten Dihalogenbenzolverbindungen.

Die anorganischen Bestandteile, beispielsweise Natrium- oder Kaliumchlorid, können vor oder nach Isolierung des Polyäthers durch geeignete Methoden, wie Lösen und Filtrieren, Sieben oder Extrahieren, entfernt werden.

Eine zweite Methode zur Durchführung des erfindungsgemäßen Verfahrens besteht darin, daß man 1 Mol Bisphenol mit ungefähr 1 Mol Dihalogenbenzolverbindung und 1,0 bis 2,2 Molen wasserfreiem Alkalicarbonat in polaren aprotischen Lösungsmitteln bei Temperaturen von 150°C bis 300°C, vorzugsweise 180°C bis 250°C oder bis zur beginnenden Zersetzung der Reaktionspartner polykondensiert.

Bevorzugt wird dabei das entstehende Wasser mit Hilfe eines Azeotropbildners in zwei Stufen entfernt.

Als polare, aprotische Lösungsmittel gelangen Verbindungen zur Anwendung, die zu den N-substituierten Säureamiden, den Sulfoxiden oder Sulfonen zählen, beispielsweise

N,N-Dimethylformamid, N,N-Dimethylacetamid, N-Methylpyrrolidon, Diemthylsulfoxid, Dimethylsulfon, Tetramethylsulfon (Sulfolan) oder Diphenylsulfon. Bevorzugt wird N-Methylpyrrolidon verwendet.

Die polaren, aprotischen Lösungsmittel werden in Mengen von 5 bis 100, vorzugsweise von 10 bis 20 Molen, bezogen auf ein Mol Bisphenol oder Dichlorbenzolverbindung, verwendet. Dies bedeutet, daß die Reaktionslösungen in Abwesenheit von Alkalicarbonat und Azeotropbildner einen Feststoffgehalt von 5 bis 50 Gew.%, vorzugsweise von 20 bis 35 Gew.%, bezogen auf das Gesamtgewicht, aufweisen.

Geeignete Wasser-Azeotropbildner sind alle Substanzen, die im Bereich der Reaktionstemperatur bei Normaldruck sieden und sich mit dem Reaktionsgemisch homogen mischen lassen, ohne chemische Reaktionen einzugehen. Als Azeotropbildner der genannten Art seien beispielsweise genannt: Chlorbenzol, Toluol und Xylol. Bevorzugt zur Anwendung gelangt Chlorbenzol.

Zur Durchführung dieses Verfahrens wird die Reaktionsmischung in der ersten Reaktionsstufe bis zur Abtrennung von mindestens 90 Gew.%, vorzugsweise 90 bis 96 Gew.%, bezogen auf das Gesamtgewicht, der theoretisch möglichen Wassermenge vorteilhafterweise 0,5 bis 4 Stunden, vorzugsweise 1 bis 2 Stunden erhitzt.

In der zweiten Reaktionsstufe wird das Reaktionsgemisch bis zur völligen Wasserfreiheit polykondensiert und hierzu wird das Reaktionsgemisch ständig mit weiterem Azeotropbildner versetzt und gleichzeitig das entstehende Azeotropgemisch abdestilliert. Die Reaktionszeit beträgt ungefähr 0,5 bis 4 Stunden, vorzugsweise 1 bis 2 Stunden.

Die Reaktionszeit in der dritten Stufe zur Polykondensation bis zur gewünschten Viskosität des Polyäthers beträgt ungefähr 3 bis 12 Stunden, vorzugsweise 4 bis 8 Stunden. Danach wird die Polykondensation durch Einleiten von Methylchlorid abgestoppt. Die Reaktionszeit hierfür beträgt ungefähr 0,1 bis 2, vorzugsweise 0,2 bis 0,5 Stunden.

Die Isolierung des Polyäthers in der vierten Stufe schließlich kann auf verschiedene Weise durchgeführt werden. Eine Abscheidung des festen Polymeren kann durch Mischung der Reaktionslösung mit einem Fällungsmittel, z.B. Wasser und/oder Methanol, durch starkes Rühren, Verspritzen oder Verdüsen geschehen. Andererseits kann das Lösungsmittel auch verdampft werden. Die anorganischen Bestandteile können durch geeignete Methoden wie Lösen, Filtrieren oder Sieben aus dem Polyäther entfernt werden.

Die mit Hilfe des erfindungsgemäßen Verfahrens hergestellten Polyäther besitzen reduzierte Viskositäten (gemessen bei 23°C in 1 %iger Schwefelsäurelösung) von 0,4 bis 1,5, vorzugsweise von 0,60 bis 1,20. Dies entspricht etwa Molekulargewichten von 16 000 bis 120 000, vorzugsweise von 25 000 bis 80 000. Die hergestellten Polyäther sind vorzüglich zur Herstellung von Formkörpern, Fasern, Folien, Kleb- und Beschichtungsstoffen geeignet.

Die Erfindung wird durch die nachfolgenden Beispiele und Vergleichsbeispiele näher erläutert. Die genannten Teile sind Gewichtsteile. Die reduzierten Viskositäten ( $_{red}$) wurden bei 24°C in 1 %iger Schwefelsäurelösung gemessen und entsprechen der Formel

$$\eta_{red} = \frac{\eta_{spez}}{C}$$

bestimmt.

Die in den Beispielen genannten Teile beziehen sich auf das Gewicht.

Beispiel 1

191,0 Teile 1,4-Bis(4-oxybenzoyl)-benzol und 172,3 Teile Bis-(4-chlorphenyl-)sulfon werden in 900 Teilen N-Methylpyrrolidon und 300 Teilen Chlorbenzol gelöst und mit 87,2 Teilen wasserfreiem Kaliumcarbonat versetzt. Das Reaktionsgemisch wird unter ständigem Abdestillieren eines Gemisches aus Wasser und Chlorbenzol innerhalb von zwei Stunden auf 150°C erhitzt. Anschließend wird die Temperatur auf 180°C gesteigert. Innerhalb weiterer zwei Stunden werden nochmals 300 Teile Chlorbenzol zugetropft, die sofort wieder azeotrop abdestillieren. Das Reaktionsgemisch wird dann 7 Stunden bei 180°C gehalten. Durch 30-minütiges Einleiten eines Methylchlorid-Stromes wird die Polykondensation abgebrochen. Die anorganischen Bestandteile werden nach Zugabe von 600 ml Chlorbenzol abfiltriert, das Polymere in Wasser ausgefällt und 12 Stunden bei 80°C im Vakuum getrocknet. Es besitzt eine reduzierte Viskosität von $\eta_{red}$ = 0,95 und ist in allen gebräuchlichen organischen Lösungsmitteln unlöslich.

Beispiel 2

318,5 Teile 1,4-Bis(4-oxybenzoyl-)benzol werden mit 276,4 Teilen wasserfreiem Kaliumcarbonat innisch vermischt und unter vermindertem Druck bei 300°C solange behandelt, bis die berechnete Menge Wasser und Kohlendioxid abgetrennt sind (ca. 3 Stunden). Danach werden 287,2 Teile Bis-4(-chlorphenyl-)sulfon hinzugefügt und das Polykondensationsgemisch unter ständigem Mischen weitere 30 Minuten bei 300°C behandelt. Nach Erreichen einer reduzierten Viskosität von $\eta_{red}$ = 0,65 werden noch-

mals 10 Teile Bis-(4-chlorphenyl-)sulfon hinzugefügt. Nach weiteren 30 Minuten war die Polykondensation beendet. Das erhaltene Polymere wurde zur Abtrennung der organischen Salze mit Wasser extrahiert. Es besaß eine Viskosität von $\eta_{red}$ = 0,90 und ließ sich zu Formkörpern hoher Temperaturbeständigkeit und guter Eigenfarbe verarbeiten, die in allen gebräuchlichen organischen Lösungsmitteln unlöslich waren.

Beispiele 3 bis 8

Man verfährt analog Beispiel 1, setzt jedoch die in der Tabelle aufgeführten Monomeren ein:

Tabelle

| Beispiel | Bisphenol (Teile) | Comonomeres (Teile) | Dihalogenverbindung (Teile) | $\eta_{red}$ (dl/g) | Lösungsmittelbeständigkeit + |
|---|---|---|---|---|---|
| 3 | VIII (191,0) | - | 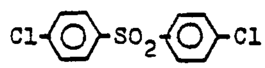 (172,3) | 1,10 | sehr gut |
| 4 | VII (95,5) | 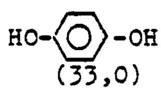 (33,0) | " | 0,95 | sehr gut |
| 5 | VII (95,5) | 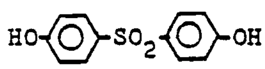 (75,1) | " | 1,15 | gut |
| 6 | VIII (95,5) | 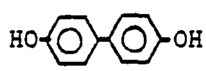 (68,5) | " | 1,05 | gut |
| 7 | VII (95,5) | 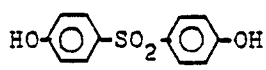 (75,1) | " | 0,90 | gut |
| 8 | VII (191,0)) | - | 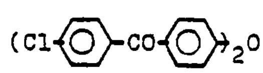 (268,4) | 0,65 | sehr gut |

+ geprüft in Methylenchlorid, Aceton und Chlorbenzol

Vergleichsbeispiel

Man verfährt wie in Beispiel 1, ersetzt jedoch das 1,4-Bis--(4-oxybenzoyl-)benzol vollständig durch 150,2 Teile Bis-(4-oxyphenyl-)sulfon. Man erhält bereits nach 6 Stunden bei 180°C ein Hochpolymeres mit einer reduzierten Viskosität von $\eta_{red}$ = 0,60, das jedoch in Methylenchlorid, Aceton und Chlorbenzol weitgehend löslich ist und somit eine für viele Anwendungsfälle ungenügende Lösungsmittelbeständigkeit aufweist.

## Patentansprüche

1. Verfahren zur Herstellung von ketogruppenhaltigen Polyäthern durch Polykondensation von im wesentlichen äquivalenten Mengen eines Bisphenols oder einer Mischung mehrerer Bisphenole mit einer Dihalogenbenzolverbindung oder einer Mischung mehrerer Dihalogenbenzolverbindungen in Gegenwart von wasserfreiem Alkalicarbonat, dadurch gekennzeichnet, daß man mindestens ein ketogruppenhaltiges Bisphenol der Formel I

$$HO-Ar^1-CO-Ar^2-CO-Ar^1-OH \qquad (I)$$

verwendet, in der $Ar^1$ einen aromatischen Rest mit 6 bis 12 C-Atomen bedeutet und $Ar^2$ die Bedeutung von $Ar^1$ oder der Formel II

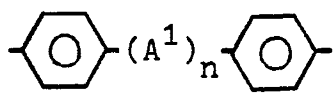

(II)

annehmen kann, in der $A^1$ für die Gruppe $-SO_2-$, $-CO-$, $-C(CH_3)_2-$ oder $-O-$ steht und n 0 oder 1 bedeutet.

2. Verfahren zur Herstellung von ketogruppenhaltigen Copolyäthern nach Anspruch 1, dadurch gekennzeichnet, daß man als zusätzliche Bisphenole Verbindungen der Formel III

$$HO - Ar^1 - [(A^1)_n - Ar^1]_m OH \qquad (III)$$

verwendet, in der $Ar^1$ und $A^1$ die oben angeführten Bedeutungen haben und n und m 0 oder 1 sein können.

3. Verfahren nach Anspruch 1, dadurch gekennzeichnet, daß man als Dihalogenbenzolverbindung eine Substanz der Formeln IV bis VI

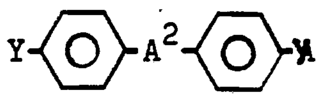
IV

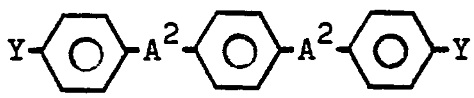
V

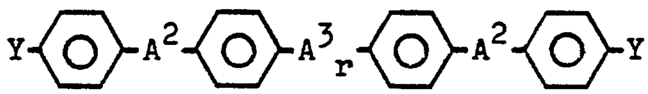
VI

verwendet, in denen Y den Rest -F oder -Cl, $A^2$ den Rest -CO- oder $-SO_2-$ bedeuten, $A^3$ für -O- oder -S- steht und r 0 oder 1 ist.

4. Verfahren nach Anspruch 1 bis 3, dadurch gekennzeichnet, daß man als wasserfreies Alkalicarbonat Natriumcarbonat und/oder Kaliumcarbonat verwendet.

5. Verfahren nach Anspruch 1, dadurch gekennzeichnet, daß man 1 Mol Bisphenol mit ungefähr 1 Mol Dihalogenbenzolverbindung und 1,0 bis 2,2 Molen wasserfreiem Alkalicarbonat in Abwesenheit von Lösungsmitteln bei Temperaturen von 200°C bis 400°C oder bis zur beginnenden Zersetzung der Reaktionspartner polykondensiert.

6. Verfahren nach Anspruch 1, dadurch gekennzeichnet, daß man 1 Mol Bisphenol mit ungefähr 1 Mol Dihalogenbenzolverbindung und 1,0 bis 2,2 Molen wasserfreiem Alkalicarbonat in polaren aprotischen Lösungsmitteln bei Temperaturen von 150°C bis 300°C oder bis zur beginnenden Zersetzung der Reaktionspartner polykondensiert.

Europäisches Patentamt

**EUROPÄISCHER RECHERCHENBERICHT**

0038028

EP 81 10 2533

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 134 505 (INVENTA) * Patentansprüche * | 1-6 |
| | FR - A - 2 340 964 (I.C.I.) * Patentansprüche; Seite 5, Zeilen 14-25 * | 1-6 |
| | FR - A - 2 305 456 (I.C.I.) * Patentansprüche * | 1-6 |
| A | FR - A - 2 330 713 (BASF) * Patentansprüche * | 1-6 |

KLASSIFIKATION DER ANMELDUNG (Int. Cl.)

C 08 G 65/40

RECHERCHIERTE SACHGEBIETE (Int. Cl.)

C 08 G 65/40

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 18-06-1981 | DERAEDT |

EPA form 1503.1 06.78